# EUROPÄISCHE PATENTANMELDUNG

(11) **EP 2 929 972 A1**
(43) Veröffentlichungstag der Anmeldung: **14.10.2015**
(21) Anmeldenummer: 14164099.5
(22) Anmeldetag: 09.04.2014
(51) Int. Cl.: B23K 9/167

(54) **Schweißbrenner**

(71) Anmelder: Plasch, Siegfried, 4600 Wels (AT)
(72) Erfinder: Plasch, Siegfried, 4600 Wels (AT)
(74) Vertreter: Jell, Friedrich

(57) **Zusammenfassung**

Die Erfindung betrifft einen Schweißbrenner (1), insbesondere WIG-Brenner, mit einem Brennerkopf (2), mit einem Brennergriff (6), mit einem zwischen Brennerkopf (2) und Brennergriff (6) vorgesehenen Brennerhals (7), mit einer Drahtdüse (9) zur Führung eines Schweißdrahts (19) zum Brennerkopf (2) und mit einer am Brennerhals (7) befestigten Halterung (8), an der die Drahtdüse (9) in ihrer Lage gegenüber dem Brennerkopf (2) verstellbar gelagert ist. Um auch bei beengten Platzverhältnissen noch hochqualitative Schweißungen durchführen zu können, wird vorgeschlagen, dass die Halterung (8) ein am Brennerhals (7) befestigtes Klemmteil (11) und ein dem Verlauf des Brennerhalses (7) folgendes Halteteil (12) aufweist, das am Klemmteil (11) mindestens drehbar gelagert ist und die Drahtdüse (9) trägt.

## Beschreibung

Die Erfindung betrifft einen Schweißbrenner, insbesondere WIG-Brenner, mit einem Brennerkopf, mit einem Brennergriff, mit einem zwischen Brennerkopf und Brennergriff vorgesehenen Brennerhals, mit einer Drahtdüse zur Führung eines Schweißdrahts zum Brennerkopf und mit einer am Brennerhals befestigten Halterung, an der die Drahtdüse in ihrer Lage gegenüber dem Brennerkopf verstellbar gelagert ist.

Die WO2004028738A2 zeigt einen Schweißbrenner mit einem als Brennkörper ausgeführten Brennerkopf. Der Brennergriff dieses Schweißbrenners geht in einen Brennerhals über, an dem der Brennerkopf befestigt ist. Zudem weist der Schweißbrenner zwei Drahtdüsen mit jeweils einem Schweißdraht auf, um den Schweißdraht zum Brennerkopf zu führen. Dazu werden die Drahtdüsen von einer verstellbaren Halterung, die nahe am Brennerkopf angeordnet ist, gehalten. Nachteilig können mit einem derartigen Schweißbrenner Schweißungen an Werkstücken bei beengten oder ungünstigen Platzverhältnissen nicht zufriedenstellend durchgeführt werden.

Der Erfindung liegt somit die Aufgabe zugrunde, ausgehend vom eingangs geschilderten Stand der Technik, einen Schweißbrenner zu schaffen, dessen Handhabung selbst bei beengten und ungünstigen Platzverhältnissen verbessert ist.

Die Erfindung löst die gestellte Aufgabe dadurch, dass die Halterung ein am Bren-nerhals befestigtes Klemmteil und ein dem Verlauf des Brennerhalses folgendes Halteteil aufweist, das am Klemmteil mindestens drehbar gelagert ist und die Drahtdüse trägt.

Weist die Halterung ein am Brennerhals befestigtes Klemmteil und ein dem Verlauf des Brennerhalses folgendes Halteteil auf, das am Klemmteil mindestens drehbar gelagert ist und die Drahtdüse trägt, können die Bauverhältnisse im Bereich des Brennerkopfs trotz der dort notwendigerweise endenden Drahtzuführung in ihrem Platzbedarf gering gehalten werden. Auf diese Weise kann nämlich die Schaffung einer variablen und in Ihren Abmessungen geringen Baugruppe ermöglicht werden, die dennoch eine exakte Anstellung eines Schweißdrahts ermöglicht. Selbst unter beengten Verhältnissen kann also eine ausreichende Bewegungsfreiheit zur einfacheren und genaueren Führung des erfindungsgemäßen Schweißbrenners vorliegen, womit dessen Handhabung sowie die Reproduzierbarkeit der Schweißungen deutlich verbesserbar ist. Zudem können durch ein vom Brennerkopf entferntes Vorsehen der Lagerung, die zwischen Klemmteil und Halteteil vorgesehen ist, dessen thermische Belastung verringert und so eventuell daraus entstehende Komplikationen - etwa ein Verklemmen - vermieden werden. Neben einer kompakten Bauweise kann sich damit auch die Standfestigkeit des Schweißbrenners verbessern.

Ist das Halteteil um seine Längsachse drehbar gelagert, kann auf einfache Weise die Ausrichtung einer Drahtdüse und in weiterer Folge des Drahtes zum Brennkopf den Erfordernissen und Bedingungen entsprechend eingestellt werden - ohne hierfür einen erhöhten Platzbedarf vorsehen zu müssen.

Ist das Halteteil stiftförmig ausgeführt, kann dies zu einem schlank ausgeführten Schweißbrenner genutzt werden. Zudem ist solch ein Halteteil konstruktiv vergleichsweise einfach herstellbar und kann damit zu einem kostengünstigen Schweißbrenner führen.

Die Konstruktionsverhältnisse im Bereich der Halterung können noch weiter vereinfacht werden, wenn das Halteteil parallel zum Brennerhals verläuft. So kann aber nicht nur eine einfache Herstellung erreicht werden, diese Ausführung begünstigt auch die Förderung des Schweißdrahts in den Bereich des Lichtbogens selbst bei geringem Platzangebot.

Steht die Drahtdüse dem Halteteil zu dessen Längsrichtung geneigt in Richtung des Brennerhalses vor, kann dies im Zusammenspiel mit der drehbaren Lagerung des Halteteils am Klemmteil mehrachsige Einstellmöglichkeiten der Schweißdrahtzuführung bewirken - was speziell beim Schweißen von Kesselböden und Kesselrohrwänden von Vorteil sein kann.

Ist zwischen Klemmteil und Halteteil eine lösbare Verbindung vorgesehen, kann dies die Wartungsfreundlichkeit und Umrüstbarkeit des Schweißbrenners begünstigen.

Weist das Klemmteil an zwei Seiten des Brennerhalses Verbindungselemente für die lösbare Verbindung mit dem Halteteil auf, kann der Schweißbrenner besonders variabel und effektiv eingesetzt werden. Insbesondere, wenn das Klemmteil an gegenüberliegenden Seiten des Brennerhalses derartige Verbindungselemente aufweist, kann dieser Vorteil genutzt werden, indem der Schweißbrenner sowohl für Schweißungen von links nach rechts, als auch umgekehrt eingesetzt wird. Zudem bringt dies die Möglichkeit mit sich, den Schweißbrenner in ein und derselben Richtung wahlweise mit vorlaufendem oder nachlaufendem Schweißdraht zu verwenden.

Ist die lösbare Verbindung als Steckverbindung ausgeführt, kann eine leichte Umrüstung des Halteteils auf die andere Seite des Brennerhalses bewerkstelligt werden. Dies kann sich bei Schweißungen, die aufgrund beengter Platzverhältnisse Richtungswechsel benötigen oder auch generell bei einem Richtungswechsel der Schweißnahtführung auszeichnen.

Besonders auszeichnen kann sich der Schweißbrenner, falls das Klemmteil einen elektrischen Anschluss aufweist, der über das elektrisch leitende Halteteil mit dem Schweißdraht der Drahtdüse zu dessen Widerstandserwärmung elektrisch verbunden ist. So kann auf konstruktiv einfache Weise ein Anschluss zur Schweißdrahterwärmung hergestellt werden - wobei unter Umständen eine Anschlussleitung für zwei Positionen des Halteteils ausreichend ist.

In den Figuren ist beispielsweise der Erfindungsgegenstand anhand einer Ausführungsvariante näher dargestellt. Es zeigen
Fig. 1 eine Seitenansicht eines Schweißbrenners und
Fig. 2 eine Vorderansicht des Schweißbrenners.

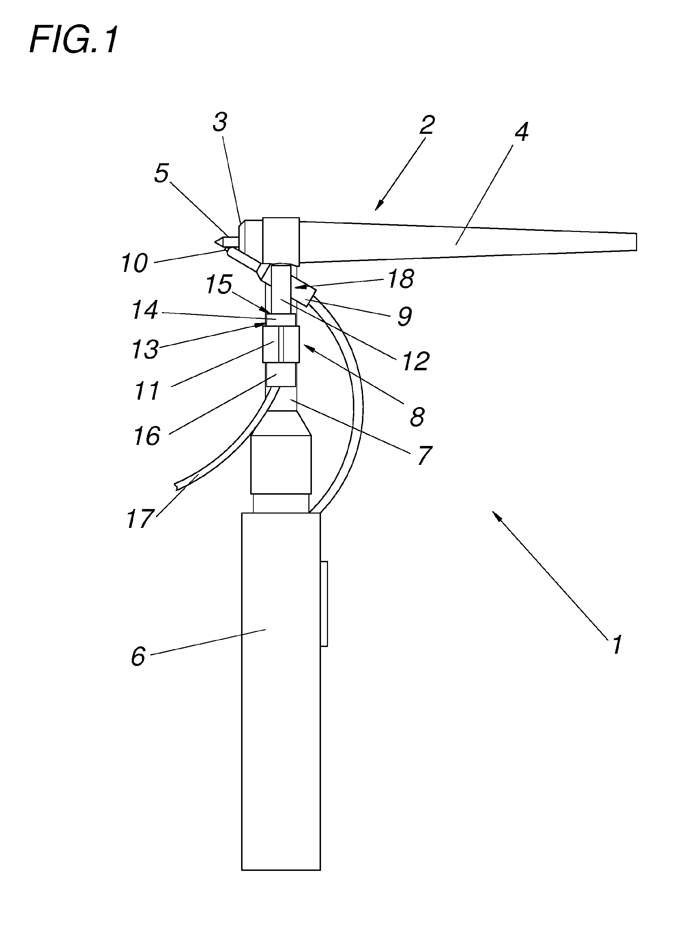

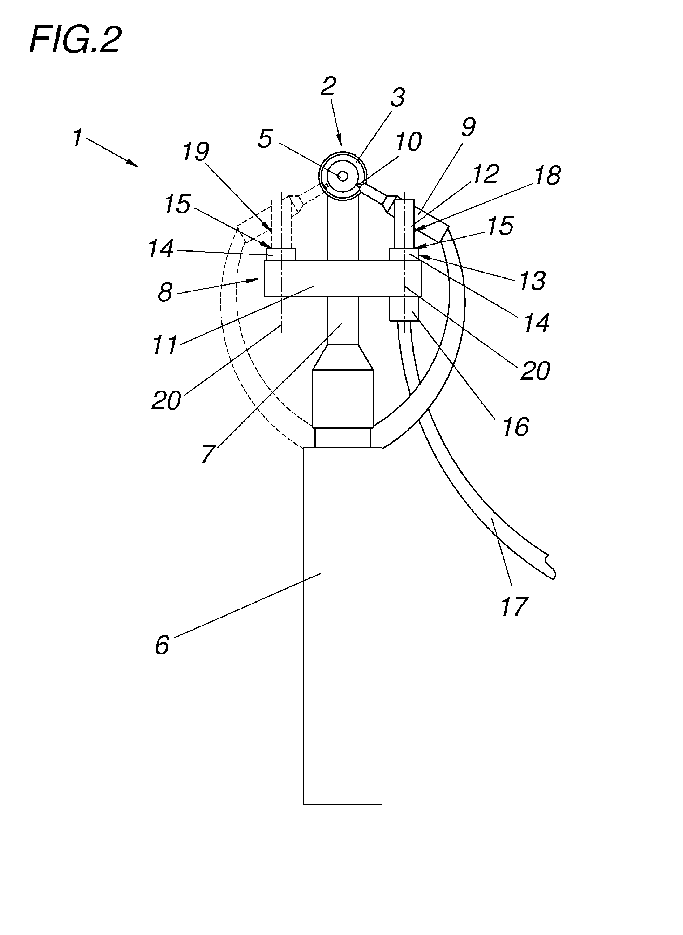

Gemäß Fig. 1 und Fig. 2 wird ein beispielhafter Schweißbrenner 1 gezeigt. Am Brennerkopf 2 des Schweißbrenners 1 sind die Gasdüse 3 und die Brennerkappe 4 sichtbar. Im Brennerkopf 2 wird beispielsweise eine Wolframelektrode 5 gehalten, zwischen der und dem - hier nicht näher dargestellten Werkstück - sich der Lichtbogen während des Schweißvorgangs bildet. Zwischen Brennerkopf 2 und Brennergriff 6 befindet sich der Brennerhals 7. An diesem ist eine Halterung 8 für die Drahtdüse 9 zur Führung eines Schweißdrahts 10 befestigt. So wird der Schweißdraht 10 zielgerichtet in den Bereich des Lichtbogens geführt. Erfindungsgemäß weist die Halterung 8 ein Klemmteil 11 und ein Halteteil 12, wobei das Halteteil 12 am Klemmteil 11 beweglich gelagert ist.

Die drehbare Lagerung 13 des Halteteils 12 um dessen Längsachse 20 ermöglicht der Drahtdüse 9 beim Schweißen - z. B. entlang von Rundungen von Rohren - eine einfache Verstellung und Anpassung der Position der Drahtdüse 9 entsprechend dem Rundungsdurchmesser. Zudem ist diese konstruktiv einfache Ausführung sehr platzsparend und erlaubt so auch den Einsatz des Schweißbrenners 1 bei beengten Platzverhältnissen.

Das stiftförmig ausgebildete, parallel zum Brennerhals 7 verlaufende Halteteil 12 gewährleistet eine besonders platzsparende Halterung 8 für die Drahtdüse 9. Zugleich erhöht sich durch diese Ausführung der Abstand des Klemmteils 11 vom Brennerkopf 2 - was wiederum dessen Standfestigkeit in Hinblick auf Wärmebelastung dienlich ist. Zudem sind auch bei beengten Platzverhältnissen noch Schwei-βungen durchführbar.

Die Drahtdüse 9 ist zur Längsrichtung des Halteteils 12 geneigt und steht in Richtung des Brennerhalses 7 vor. Dadurch wird die platzsparende Anordnung der Halterung 12 weiter optimiert, wobei dennoch flexible Einstellbarkeit gegeben ist.

Die lösbare Verbindung zwischen Klemmteil 11 und Halteteil 12 erlaubt hohe Wartungsfreundlichkeit sowie ein schnelles Umrüsten am Schweißbrenner 1. Dazu zeigt diese Ausführungsvariante Verbindungselemente 14. Des Weiteren sind am Klemmteil 11 für die lösbare Verbindung mit dem Halteteil 12 beidseitig des Brennerhalses 7, in diesem Fall gegenüberliegend, Verbindungselemente 14 angeordnet - wie gemäß Figur 2 erkennbar. So ist der Schweißbrenner 1 sowohl für Schwei-βungen von links nach rechts als auch umgekehrt einsetzbar. Alternativ kann dadurch mit vorlaufendem oder nachlaufendem Schweißdraht 10 gearbeitet werden.

Die lösbare Verbindung ist als Steckverbindung 15 ausgeführt. Dies erlaubt das schnelle Umrüsten des Halteteils 12 auf die andere Seite des Brennerhalses 7. Dies macht den Schweißbrenner 1 leicht an geänderte Schweißrichtungen oder Werkstückgeometrien anpassbar.

Entsprechend Fig. 1 und Fig. 2 verfügt das Klemmteil 11 über einen elektrischen Anschluss 16. Über diesen und das elektrisch leitend ausgeführte Halteteil 12 wird Strom über eine Zuleitung 17 zum Schweißdraht 10 zu dessen Widerstandserwärmung geleitet. Das gezeigte Ausführungsbeispiel hat eine Anschlussstelle 16 für beide Halteteilpositionen 18, 19. Es sind jedoch auch Ausführungen mit je einer Anschlussstelle 16 je Halteteilposition 18, 19 und einer umsteck- oder umklemmbaren Stromzuführung denkbar.

## Patentansprüche

1. Schweißbrenner, insbesondere WIG-Brenner, mit einem Brennerkopf (2), mit einem Brennergriff (6), mit einem zwischen Brennerkopf (2) und Brennergriff (6) vorgesehenen Brennerhals (7), mit einer Drahtdüse (9) zur Führung eines Schweißdrahts (19) zum Brennerkopf (2) und mit einer am Brennerhals (7) befestigten Halterung (8), an der die Drahtdüse (9) in ihrer Lage gegenüber dem Brennerkopf (2) verstellbar gelagert ist, **dadurch gekennzeichnet, dass** die Halterung (8) ein am Brennerhals (7) befestigtes Klemmteil (11) und ein dem Verlauf des Brennerhalses (7) folgendes Halteteil (12) aufweist, das am Klemmteil (11) mindestens drehbar gelagert ist und die Drahtdüse (9) trägt.

2. Schweißbrenner nach Anspruch 1, **dadurch gekennzeichnet, dass** das Halteteil (12) um seine Längsachse (20) drehbar gelagert ist.

3. Schweißbrenner nach Anspruch 1 oder 2, **dadurch gekennzeichnet, dass** das Halteteil (12) stiftförmig ausgeführt ist.

4. Schweißbrenner nach Anspruch 1, 2 oder 3, **dadurch gekennzeichnet, dass** das Halteteil (12) parallel zum Brennerhals (7) verläuft.

5. Schweißbrenner nach einem der Ansprüche 1 bis 4, **dadurch gekennzeichnet, dass** die Drahtdüse (9) dem Halteteil (12) zu dessen Längsrichtung geneigt in Richtung des Brennerhalses (7) vorsteht.

6. Schweißbrenner nach einem der Ansprüche 1 bis 5, **dadurch gekennzeichnet, dass** zwischen Klemmteil (11) und Halteteil (12) eine lösbare Verbindung vorgesehen ist.

7. Schweißbrenner nach Anspruch 6, **dadurch gekennzeichnet, dass** das Klemmteil (11) an zwei, insbesondere gegenüberliebenden, Seiten des Brennerhalses (7) Verbindungselemente (14) für die lösbare Verbindung mit dem Halteteil (12) aufweist.

8. Schweißbrenner nach Anspruch 6 oder 7, **dadurch gekennzeichnet, dass** die lösbare Verbindung als Steckverbindung (15) ausgeführt ist.

9. Schweißbrenner nach einem der Ansprüche 1 bis 8, **dadurch gekennzeichnet, dass** das Klemmteil (11) einen elektrischen Anschluss (16) aufweist, der über das elektrisch leitende Halteteil (12) mit dem Schweißdraht (10) der Drahtdüse (9) zu dessen Widerstandserwärmung elektrisch verbunden ist.
